# EUROPEAN PATENT APPLICATION

(11) **EP 3 617 336 A1**
(43) Date of publication of application: **04.03.2020**
(21) Application number: 18789839.0
(22) Date of filing: 27.04.2018
(51) Int. Cl.: C22C 38/00, C21D 9/00, C21D 9/46, C22C 38/06, C22C 38/60

(54) **HIGH STRENGTH STEEL SHEET AND METHOD FOR MANUFACTURING SAME**

(30) Priority: 28.04.2017 JP 2017090031
(71) Applicant: Nippon Steel Corporation, Tokyo 1008071 (JP)
(72) Inventor: YABU, Shohei, Tokyo 100-8071 (JP); HAYASHI, Koutarou, Tokyo 100-8071 (JP); ABUKAWA, Genki, Tokyo 100-8071 (JP); UENISHI, Akihiro, Tokyo 100-8071 (JP)
(74) Representative: Vossius & Partner Patentanwälte Rechtsanwälte mbB
(86) International application number: PCT/JP2018/017311
(87) International publication number: WO 2018/199328

(57) **Abstract**

A high strength steel sheet containing a large amount of Mn which has bendability suitable as a material for auto part use and a method of producing the same are provided. A high strength steel sheet comprising a center part in a sheet thickness and a softened surface layer part on one surface or both surfaces of the center part in the sheet thickness, characterized in that, the center part in the sheet thickness has an average Mn concentration of greater than 4.0 mass% and less than 10.0 mass%, each softened surface layer part has a thickness of 0.1% to 30% of the sheet thickness, and the softened surface layer part has an average Mn concentration of 2.5 mass% or less, a recrystallization rate of 90% or more, and recrystallized structures with an average crystal grain size of 0.1 µm or more and 40 µm or less.

## Description

### FIELD

The present invention relates to a high strength steel sheet high in concentration of contained Mn which is excellent in bendability and to a method of producing the same.

### BACKGROUND

To realize both lighter weight and greater safety of the body and parts of automobiles etc., the steel sheets used as materials of these are being made higher in strength. In general, if making a steel sheet high in strength, the elongation falls and the formability of the steel sheet becomes impaired. Therefore, to use a high strength steel sheet as a member for automobile use, it is necessary to improve both the contradictory properties of strength and formability.

To improve elongation, up until now, so-called TRIP steel utilizing the transformation-induced plasticity of residual austenite (residual γ) has been proposed (for example, PTL 1).

Further, as steel sheet with an amount of residual austenite greater than the above TRIP steel and with a ductility over that of the above TRIP steel, steel to which over 4.0% of Mn is added has been proposed (for example, NPL 1). The above steel contains a large amount of Mn, so there is also a remarkable effect of lightening the weight of the members which it is used for.

However, since the above steel contains a large amount of Mn, remarkable segregation of Mn at the time of solidification occurs. In structures with remarkable Mn segregation, band-shaped structures where hard structures are segregated at Mn concentrated regions are formed.

If band-shaped structures are formed, in forming operations accompanied with local deformation like bending, deformation easily becomes localized. These parts where deformation concentrates become starting points of cracking, so it is known that the formability remarkably deteriorates.

For this reason, to realize steel containing a large amount of Mn which is excellent in bendability, it is important to reduce the Mn segregation.

For example, PTL 2, as shown in the examples, discloses using steel sheet with a martensite fraction of 20% or more, cold rolling and pickling it, heating the subsequent steel sheet once to a temperature region of 750°C or more, making the Mn concentrated at the band-shaped structures disperse, making the band-shaped structures thinner in thickness, and finely dispersing them to obtain steel sheet excellent in formability.

In this regard, in bending steel sheet, a large tensile stress acts in the circumferential direction of the surface layer part at the outer circumference of the bend, while a large compressive stress acts on the surface layer part at the inner circumference of the bend. Therefore, the bendability of an ultra high strength cold rolled steel sheet is greatly affected by the state of the surface layer part.

Therefore, the inventors hypothesized that by reducing the segregation of Mn at the surface layer, it would be possible to ease the tensile stress and compressive stress occurring at the surface of steel sheet at the time of bending and improve the bendability.

Here, as means for reforming the surface layer, utilization of clad steel sheet may be considered.

PTL 3 discloses a method of producing clad steel sheet comprising a base material steel and at least one of stainless steel and Ni and Ni alloy while reducing warping.

Further, as means for reforming the surface layer, utilization of the cold spray method has been proposed. PTL 4 discloses cold rolled steel sheet having a substrate part containing Mn and a deposited layer (surface layer) low in Mn concentration formed on at least one side of the substrate part by the cold spray method.

Based on the above hypothesis, the inventors prepared clad steel sheets reduced in the average Mn concentration of the surface layer from the average Mn concentration of the center layer, cold rolled and annealed the clad steel sheets, and investigated the bendability of the steel sheets.

Further, as described in several examples of PTL 4, before forming the deposited layer (surface layer), the substrate part with a high average Mn concentration was hot rolled, a deposited layer (surface layer) with a low average Mn concentration was formed by the cold spray method on the hot rolled substrate part, the laminate was cold rolled and annealed, and the steel sheet was investigated for bendability. Further, as described in another example of PTL 4, as the substrate part, cold rolled sheet with a high average Mn concentration was used, a deposited layer (surface layer) with a low average Mn concentration was formed by the cold spray method on the cold rolled sheet, the assembly was annealed, and the steel sheet was investigated for bendability.

However, it became clear that regardless of having eased the segregation of Mn at the surface layer, the bendability was not improved.

### [CITATIONS LIST]

### [PATENT LITERATURE]

[PTL 1] Japanese Unexamined Patent Publication No. 5-59429
[PTL 2] Japanese Unexamined Patent Publication No. 2002-88447
[PTL 3] Japanese Unexamined Patent Publication No. 1-192404
[PTL 4] Japanese Unexamined Patent Publication No. 2015-193892

### [NON PATENT LITERATURE]

[NPL 1] FURUKAWA Takashi, MATSUMURA Osamu, "Formation of Retained Austenite and Mechanical Properties in Low-Carbon Steels Treated with Simple Heat Treatment" ("Netsu Shori", the Japan Society for Heat Treatment, 1997, vol. 37, no. 4), p. 204

### SUMMARY

### [TECHNICAL PROBLEM]

The present invention advantageously solves the above problems in the prior art and has as its object to provide steel sheet containing a large amount of Mn which has bendability suitable as a material for auto part use and a method of producing the same.

### [SOLUTION TO PROBLEM]

The inventors engage in intensive studies to solve the problems relating to the bendability of an ultra high strength steel sheet. First, the inventors investigated the reason why the bendability is not improved regardless of using clad steel sheet reduced in average Mn concentration of the surface layer from the average Mn concentration of the center layer.

As a result, they discovered that to raise the ductility of the center layer containing a large amount of Mn, it is necessary to make the annealing temperature after the cold rolling a low temperature, but with annealing at a low temperature, the surface layer is not sufficiently recrystallized and hard nonrecrystallized structures form starting points of cracking and that this is the reason for deterioration of the bendability.

The inventors further investigated the reason why the bendability is not improved regardless of using cold rolled steel sheet reduced in average Mn concentration of the deposited layer (surface layer) formed by the cold spray method from the average Mn concentration of the substrate part.

As a result, it was learned that if hot rolling a substrate part with a high average Mn concentration before forming a deposited layer (surface layer), forming on the hot rolled substrate part a deposited layer (surface layer) with a low average Mn concentration by the cold spray method, and cold rolling and annealing the result to obtain a steel sheet, the deposited layer (surface layer) is poor in recrystallization rate, so the bendability is not improved.

Further, it was learned that if using as a substrate part a cold rolled sheet with a high average Mn concentration, forming on the cold rolled sheet a deposited layer (surface layer) with a low average Mn concentration by the cold spray method, and annealing this to obtain steel sheet, pores form in the deposited layer (surface layer), so the bendability is not improved. Furthermore, it became clear that the crystal grain size of the deposited layer (surface layer) becomes coarser, so sufficient bendability cannot be secured.

Therefore, the inventors engaged in further detailed studies. As a result, they learned that by welding steel sheets having certain features to the two sides of a base material, hot rolling and cold rolling the assembly under specific conditions, and annealing the cold rolled sheet under specific conditions, it is possible to maintain the ductility of the center layer while improving the bendability the most.

The mechanism of this effect is believed to be the reduction of the concentration of Mn at the surface layer of the multilayer steel sheet to suppress Mn segregation and the sufficient recrystallization and consequent suppression of localization of deformation at the bent surface and the improvement of ductility of the surface layer and consequent suppression of cracking. Furthermore, the recrystallized particle size of the surface layer (particle size of ferrite) becomes finer, so it may be that the bendability is further improved.

The gist of the present invention obtained in this way is as follows:
(1) A high strength steel sheet comprising
   a center part in a sheet thickness and
   a softened surface layer part on one surface or both surfaces of the center part in the sheet thickness,
   characterized in that,
   the center part in the sheet thickness has an average Mn concentration of greater than 4.0 mass% and less than 10.0 mass%,
   each softened surface layer part has a thickness of 0.1% to 30% of the sheet thickness, and
   the softened surface layer part has an average Mn concentration of 2.5 mass% or less, a recrystallization rate of 90% or more, and recrystallized structures with an average crystal grain size of 0.1 µm or more and 40 µm or less.
(2) The high strength steel sheet according to (1), characterized in that
   the center part in the sheet thickness contains, by mass%,
   C: greater than 0.05% and less than 0.80%,
   Si: 0.001% or more and less than 3.50%,
   Mn: greater than 4.0% and less than 10.0%,
   P: 0.10% or less,
   S: 0.010% or less,
   sol. Al: 0.001% or more and less than 3.00%,
   N: less than 0.050%, and
   a balance of iron and unavoidable impurities.
(3) The high strength steel sheet according to (2), characterized in that the center part in the sheet thickness further contains, by mass%, at least one selected from a group consisting of
   Cr: 0.01% or more and 2.00% or less,
   Mo: 0.01% or more and 2.00% or less,
   Cu: 0.01% or more and 2.00% or less, and
   Ni: 0.01% or more and 2.00% or less.
(4) The high strength steel sheet according to (2) or (3), characterized in that the center part in the sheet thickness further contains, by mass%, at least one selected from a group consisting of
   Ti: 0.005% or more and 0.30% or less,
   Nb: 0.005% or more and 0.30% or less,
   V: 0.005% or more and 0.30% or less, and
   W: 0.005% or more and 0.30% or less.
(5) The high strength steel sheet according to any one of (2) to (4), characterized in that the center part in the sheet thickness further contains, by mass%, at least one selected from a group consisting of
   B: 0.0001% or more and 0.010% or less,
   Ca: 0.0001% or more and 0.010% or less,
   Mg: 0.0001% or more and 0.010% or less,
   Zr: 0.0001% or more and 0.010% or less, and
   REM: 0.0001% or more and 0.010% or less.
(6) The high strength steel sheet according to any one of (2) to (5), characterized in that the center part in the sheet thickness further contains, by mass%, at least one selected from a group consisting of
   Sb: 0.0005% or more and 0.050% or less,
   Sn: 0.0005% or more and 0.050% or less, and
   Bi: 0.0005% or more and 0.050% or less.
(7) The high strength steel sheet according to any one of (2) to (6), characterized in that an amount of C in the softened surface layer part is 0.9 time or less of an amount of C in the center part in the sheet thickness.
(8) The high strength steel sheet according to any one of (3) to (7), characterized in that a total of an amount of Cr and an amount of Mo in the softened surface layer part is 0.9 time or less of a total of an amount of Cr and an amount of Mo in the center part in the sheet thickness.
(9) The high strength steel sheet according to any one of (3) to (8), characterized in that a total of an amount of Cu and an amount of Ni in the softened surface layer part is 0.9 time or less of a total of an amount of Cu and an amount of Ni in the center part in the sheet thickness.
(10) The high strength steel sheet according to any one of (4) to (9), characterized in that a total of an amount of Ti and an amount of Nb in the softened surface layer part is 0.9 time or less of a total of an amount of Ti and an amount of Nb in the center part in the sheet thickness.
(11) The high strength steel sheet according to any one of (4) to (10), characterized in that a total of an amount of V and an amount of W in the softened surface layer part is 0.9 time or less of a total of an amount of V and an amount of W in the center part in the sheet thickness.
(12) The high strength steel sheet according to any one of (5) to (11), characterized in that an amount of B in the softened surface layer part is 0.9 time or less of an amount of B in the center part in the sheet thickness.
(13) The high strength steel sheet according to any one of (1) to (12), characterized in that a surface of the softened surface layer part further contains a hot dip galvanized layer, a hot dip galvannealed layer, or an electrogalvanized layer.
(14) A method of producing the high strength steel sheet according to any one of (1) to (13), characterized in that the method comprises:
   superposing a softened surface layer part-use steel sheet constituting the softened surface layer part on one surface or both surfaces of a base material steel sheet constituting the center part in the sheet thickness to form a multilayer steel sheet,
   heating the multilayer steel sheet to 1080°C or more and 1300°C or less and hot rolling the heated multilayer steel sheet under conditions of a finish rolling start temperature of 800°C or more and 1000°C or less,
   cooling the hot rolled multilayer steel sheet to 500°C or more and 700°C or less within 2 seconds after the end of the finish rolling,
   cooling the multilayer steel sheet down to a temperature of 500°C or more and 700°C or less, and then holding the multilayer steel sheet for 3 seconds or more,
   pickling the multilayer steel sheet held for 3 seconds or more at a temperature of 500°C or more and 700°C or less, and then cold rolling the multilayer steel sheet by a rolling reduction of 20% or more and 70% or less, and
   holding the cold rolled multilayer steel sheet at a temperature of 600°C or more and 750°C or less for 5 seconds or more, and then cooling the cold rolled multilayer steel sheet.
(15) The method of producing the high strength steel sheet according to (14), characterized by coiling the multilayer steel sheet held for 3 seconds or more at a temperature of 500°C or more and 700°C or less at a coiling temperature of 600°C or less.
(16) The method of producing the high strength steel sheet according to (15), characterized by holding the coiled multilayer steel sheet at a temperature of 300°C or more and 550°C or less before the cold rolling so as to temper the coiled multilayer steel sheet.

### [ADVANTAGEOUS EFFECTS OF INVENTION]

According to the present invention, it is possible to provide a high strength steel sheet having a high concentration of contained Mn which has an excellent strength-ductility balance and has an excellent bendability.

### DESCRIPTION OF EMBODIMENTS

Below, embodiments of the present invention will be explained. Note that, the present invention is not limited to the following embodiments.

### 1. Constitution of Softened Surface Layer Part

The reasons for prescribing the constitution of the steel sheet of the present invention in the above way will be explained next. In the following explanation, the "%" showing the contents of the elements mean "mass%" unless otherwise indicated.

The steel sheet of the present invention has to have a softened surface layer part of a thickness of 0.1% to 30% of the sheet thickness which has an average Mn concentration of 2.5 mass% or less and a recrystallization rate of 90% or more.

### Thickness of softened surface layer part of 0.1% or more and 30% or less

If the thickness of softened surface layer part is less than 0.1% of the sheet thickness, sufficient improvement of the bendability cannot be obtained, while if greater than 30%, the tensile strength remarkably deteriorates. The thickness of softened surface layer part is more preferably 20% or less of the sheet thickness, still more preferably 10% or less.

The "softened surface layer part" is determined as follows: First, the cross-sectional structure of the steel sheet is revealed by Nital corrosion. A structural image is obtained by observation by an optical microscope or scan type electron microscope. Based on this, the total thickness of the steel sheet is calculated. At the center of the steel sheet in the sheet thickness direction, the Vickers hardnesses are measured at an indentation load of 100 g at five points in the direction vertical to the sheet thickness direction at indentation intervals where the indentations will not interfere with each other. The average value of these is defined as the average Vickers hardness at the center position in the sheet thickness direction. Next, a Vickers hardness test is conducted at five points in the same way as the above from the center in the sheet thickness direction toward the surface at indentation intervals of fixed intervals of 5% of the total thickness of the steel sheet at different sheet thickness direction positions. When the average Vickers hardness at a certain sheet thickness direction position becomes 0.6 time or less of the average Vickers hardness at the center position in the sheet thickness direction, the surface side from that position is defined as the softened surface layer part. If a value of 0.6 time or less of the average Vickers hardness cannot be obtained at indentations at 5% intervals and the softened surface layer part cannot be defined, the softened surface layer part is defined by performing indentation while making the interval between two indentation points of the surface layer any fixed interval shorter than the initial indentation intervals.

### Average Mn concentration of softened surface layer part of 2.5 mass% or less

Mn is an element aggravating the formation of band-shaped structures. If the average Mn concentration of softened surface layer part is greater than 2.5 mass%, the softened surface layer part will end up being formed with band-shaped structures and excellent bendability will not be able to be obtained. For this reason, the average Mn concentration of the softened surface layer part is made 2.5 mass% or less, preferably 2.0 mass% or less, more preferably 1.5 mass% or less. The smaller the amount of Mn, the more difficult it for the band-shaped structures to form, so the lower limit of the average Mn concentration is not particularly prescribed. Note that, "the average Mn concentration of the softened surface layer part" is found by measuring by EPMA the Mn concentrations at 20 points at 50 µm intervals along a line in a direction vertical to the sheet thickness direction at the center in sheet thickness direction at the structural cross-section and averaging the same.

### Recrystallization rate of softened surface layer part of 90% or more

If the surface layer is insufficiently recrystallized and nonrecrystallized structures are present, since the nonrecrystallized structures are poor in ductility, they form starting points of cracking at the time of bending deformation. If the recrystallization rate of the softened surface layer part is less than 90%, a good bendability cannot be obtained, so the recrystallization rate of the softened surface layer part is made 90% or more. Preferably, it is 95% or more.

### Average crystal grain size of softened surface layer part of 0.1 µm or more and 40 µm or less

If the average crystal grain size of the recrystallized structures (ferrite) at the surface layer becomes coarser, unevenness of deformation is aggravated at the time of bending deformation, so this becomes a reason for deterioration of the bendability. Therefore, the average crystal grain size of the softened surface layer part is made 40 µm or less. The average crystal grain size of the softened surface layer part is more preferably 30 µm or less, still more preferably 25 µm or less. On the other hand, if the average crystal grain size becomes 0.1 µm or less, the softened surface layer part remarkably deteriorates in ductility, so the average crystal grain size of the softened surface layer part is made 0.1 µm or more. The average crystal grain size of the softened surface layer part is more preferably 0.5 µm or more, still more preferably 1 µm or more.

The "recrystallization rate" is determined as follows. In a test for measuring the recrystallization rate using the SEM/EBSD method, the surface of the steel sheet is polished by mirror polishing and colloidal polishing to make the center position in thickness direction of the softened surface layer part defined by the above-mentioned method become the measurement surface. A field emission type scan electron microscope (FE-SEM) and OIM crystal orientation analysis apparatus are used to obtain a group of crystal orientation data at 0.2 µm intervals at a 100 µm square region of the measurement surface. The group of obtained crystal orientation data is analyzed by analysis software (TSL OIM Analysis). A region with a kernel average misorientation (KAM value) between first proximity measurement points of 1.0° or less is defined as a recrystallized structure. The area ratio of this region to the entire region is calculated.

The average crystal grain size of the softened surface layer part is determined as follows. In a test for measuring the average crystal grain size by the SEM/EBSD method, the group of crystal orientation data obtained by the above-mentioned method is analyzed by analysis software (TSL OIM analysis). A region surrounded by crystal grain boundaries having a difference of orientation of a crystal orientation difference of 15° or more is defined as one crystal grain. The particle size at this time is calculated by the area fraction method. The average particle size of the observed region as a whole is calculated.

### 2. Chemical Composition of Center Part in Sheet Thickness

Next, the chemical composition of the center part in the sheet thickness (center layer) desirable for obtaining the effects of the present invention will be explained. Note that, the "%" relating to the contents of the elements mean "mass%" unless otherwise indicated.

### C: greater than 0.05% and less than 0.80%

C raises the strength of the steel and secures residual austenite, so is an extremely important element. To maintain sufficient strength while obtaining the amount of residual austenite, a greater than 0.05% content of C becomes required. On the other hand, if excessively containing C, the weldability of the steel sheet is impaired, so the upper limit of the C content is made less than 0.80%. The content of C is preferably a range of 0.60% or less, more preferably a range of 0.50% or less.

### Si: 0.001% or more and less than 3.50%,

Si is an element effective for strengthening the tempered martensite, making the structure uniform, and improving the workability. Further, Si has the action of suppressing the precipitation of cementite and promoting the residual presence of austenite. To obtain the above effect, an Si content of 0.001% or more becomes necessary. On the other hand, if excessively containing Si, the low temperature toughness of the steel sheet is impaired, so the upper limit value of the Si content is made less than 3.50%. The lower limit value of Si is preferably 0.01%, more preferably 0.30%, still more preferably 0.50%. By making the lower limit value of the Si content the above range, it is possible to further improve the uniform elongation of the steel sheet. The upper limit value of the Si content is preferably 3.00%, more preferably 2.50%.

### Mn: greater than 4.00% and less than 10.0%,

Mn is an element stabilizing austenite and enhancing the hardenability. Further, in the steel sheet of the present invention, Mn is made to disperse into the austenite to stabilize the austenite more. To stabilize austenite at room temperature, greater than 4.00% of Mn is necessary. On the other hand, if the steel sheet excessively contains Mn, the low temperature toughness is impaired, so the upper limit of the content of Mn is made less than 10.0%. The lower limit value of the Mn content is preferably 4.30%, more preferably 4.80%. The upper limit value of the content of Mn is preferably 8.00%, more preferably 7.50%. By making the lower limit value and upper limit value of the Mn content the above ranges, it is possible to further stabilize the ductility. Note that, "the average Mn concentration of the center part in the sheet thickness" is found by measuring by EPMA the Mn concentrations at 20 points at 50 µm intervals along a line in a direction vertical to the sheet thickness direction at the center in sheet thickness direction at the structural cross-section and averaging the same.

### sol. Al: 0.001% or more and less than 3.00%,

Al is a deoxidizing agent and has to be included in an amount of 0.001% or more. Further, Al broadens the dual phase temperature region at the time of annealing, so also has the action of raising the stability of the material. The greater the content of Al, the greater that effect becomes, but if excessively containing Al, deterioration of the surface properties, coatability, weldability, etc. is invited, so the upper limit of sol. Al was made less than 3.00%. The lower limit value of the sol. Al content is preferably 0.005%, more preferably 0.01%, still more preferably 0.02%. The upper limit value of the sol. Al content is preferably 2.50%, more preferably 1.80%. By making the lower limit value and upper limit value of the sol. Al content the above ranges, the balance between the deoxidizing effect and effect of stabilization and improvement of the material quality and the surface properties, coatability, and weldability becomes better.

### P: 0.10% or less

P is an impurity. If the steel sheet excessively contains P, the toughness and weldability are impaired. Therefore, the upper limit of the P content is made 0.10% or less. The upper limit value of the P content is preferably 0.050%, more preferably 0.030%, still more preferably 0.020%. The steel sheet according to the present embodiment does not require P, so the lower limit value of the P content is 0.000%. The lower limit value of the P content may be made greater than 0.000% or 0.001% as well, but the smaller the P content, the better.

### S: 0.010% or less

S is an impurity. If the steel sheet excessively contains S, MnS stretched by the hot rolling is formed and deterioration of the bendability and hole expandability and other aspects of formability is invited. Therefore, the upper limit of the S content is made 0.010% or less. The upper limit value of the S content is preferably 0.007%, more preferably 0.003%. The steel sheet according to the present embodiment does not require S, so the lower limit value of the S content is 0.000%. The lower limit value of the S content may be made greater than 0.000% or 0.0001% as well, but the smaller the S content, the better.

### N: less than 0.050%

N is an impurity. If the steel sheet contains 0.050% or more of N, deterioration of the toughness is invited. Therefore, the upper limit of the N content is made less than 0.050%. The upper limit value of the N content is preferably 0.010%, more preferably 0.006%. The steel sheet according to the present embodiment does not require N, so the lower limit value of the N content is 0.000%. The lower limit value of the N content may be made greater than 0.000% or 0.0003% as well, but the smaller the N content, the better.

### Cr: 0.01% or more and 2.00% or less, Mo: 0.01% or more and 2.00% or less, Cu: 0.01% or more and 2.00% or less, and Ni: 0.01% or more and 2.00% or less

Cr, Mo, Cu, and Ni respectively are not essential elements in the steel sheet according to the present embodiment. However, Cr, Mo, Cu, and Ni are elements improving the strength of the steel sheet, so may be included. To obtain the effect of improvement of strength of the steel sheet, the steel sheet may contain one or more elements selected from a group consisting of Cr, Mo, Cu, and Ni in respective amounts of 0.01% or more. However, if the steel sheet is made to excessively contain these elements, surface scratches become easily formed at the time of hot rolling. Furthermore, the hot rolled steel sheet becomes too high in strength and the cold reliability sometimes falls. Therefore, the upper limit values of the respective contents of the one or more elements selected from a group consisting of Cr, Mo, Cu, and Ni are made 2.00%.

### Ti: 0.005% or more and 0.30% or less, Nb: 0.005% or more and 0.30% or less, V: 0.005% or more and 0.30% or less, and W: 0.005% or more and 0.30% or less

Ti, Nb, V, and W are not essential elements in the steel sheet according to the present embodiment. However, Ti, Nb, V, and W are elements forming fine carbides, nitrides, or carbonitrides, so are effective for improving the strength of the steel sheet. Therefore, the steel sheet may contain one or more elements selected from a group consisting of Ti, Nb, V, and W. To obtain the effect of improvement of strength of the steel sheet, the lower limit values of the respective contents of the one or more elements selected from a group consisting of Ti, Nb, V, and W are preferably made 0.005%. On the other hand, if including these elements in excess, the hot rolled steel sheet rises in strength too much and sometimes the cold rollability falls. Therefore, the upper limit values of the contents of the one or more elements selected from a group consisting of Ti, Nb, V, and W are made 0.30%.

### B: 0.0001% or more and 0.010% or less, Ca: 0.0001% or more and 0.010% or less, Mg: 0.0001% or more and 0.010% or less, Zr: 0.0001% or more and 0.010% or less, and REM: 0.0001% or more and 0.010% or less

B, Ca, Mg, Zr, and REM are not essential elements. However, B, Ca, Mg, Zr, and REM improve the local ductility and hole expandability of the steel sheet. To obtain this effect, the lower limit values of the one or more elements selected from a group consisting of B, Ca, Mg, Zr, and REM are preferably 0.0001%, more preferably 0.001%. However, excessive amounts of these elements cause the steel sheet to deteriorate in workability, so the upper limits of the contents of these elements are made 0.010%. The total of the contents of the one or more elements selected from a group consisting of B, Ca, Mg, Zr, and REM is preferably made 0.030% or less.

### Sb: 0.0005% or more and 0.050% or less, Sn: 0.0005% or more and 0.050% or less, and Bi: 0.0005% or more and 0.050% or less

Sb, Sn, and Bi are not essential elements. However, Sb, Sn, and Bi keep the Mn, Si, and/or Al and other easily oxidizable elements in the steel sheet from being diffused in the steel sheet surface and forming oxides and improve the surface properties and plateability of the steel sheet. To obtain this effect, the lower limit values of the respective contents of the one or more elements selected from a group consisting of Sb, Sn, and Bi are preferably 0.0005%, more preferably 0.001%. On the other hand, if the respective contents of these elements exceed 0.050%, the effects become saturated, so the upper limit values of the respective contents of these elements were made 0.050%.

### 3. Chemical Composition of Softened Surface Layer Part

The steel sheet in the present invention sometimes differs in chemical composition between the softened surface layer part and the center part in the sheet thickness in the elements other than Mn as well. In such a case, the preferable chemical composition in the softened surface layer part is as follows:

### C: 0.9 time or less C amount of center part in sheet thickness

C raises the strength of the steel sheet and is added to raise the strength of the high strength steel sheet. The amount of C in the softened surface layer part is preferably 0.9 time or less the amount of C in the center part in the sheet thickness. This is so as to make the hardness of the softened surface layer part lower than the hardness of the center part in the sheet thickness. If larger than 0.9 time, an excellent bendability sometimes cannot be obtained. More preferably, the amount of C in the softened surface layer part is 0.7 time or less the amount of C in the center part in the sheet thickness, still more preferably 0.5 time or less, most preferably 0.3 time or less. The preferable content of C in the center part in the sheet thickness is less than 0.80%, so the preferable content of C in the softened surface layer part becomes less than 0.72%. Preferably the content is less than 0.5%, more preferably less than 0.3%, most preferably less than 0.1%. The lower limit of the amount of C is not particularly prescribed. In the case of using ultra low C steel for industrial use, 0.001% or so is the substantive lower limit, but from the viewpoint of the solid solution amount of C, use of interstitial free steel using Ti, Nb, etc. to completely eliminate the solid solution C may also be used.

### Si: 0.001% or more and less than 3.50%

Si is a ferrite stabilizing element. It increases the Ac3 transformation point, so enables the formation of a large amount of ferrite at a broad range of annealing temperatures and is added from the viewpoint of improving the structural control. To obtain such an effect, the amount of Si has to be made 0.001% or more. However, addition of 3.50% or more causes deterioration of the surface conditions of the steel sheet, so the content is made less than 3.50%.

### P: 0.10% or less

P causes embrittlement of the weld zone. If greater than 0.10%, the weld zone becomes remarkably brittle, so the suitable range was restricted to 0.10% or less. The lower limit of the content of P is not prescribed, but making P less than 0.001% is economically disadvantageous.

### S: 0.010% or less

S has a detrimental effect on the weldability and on the manufacturability at the time of casting and hot rolling. Due to this, the upper limit value was made 0.010% or less. The lower limit of the content of S is not prescribed, but making S less than 0.0001% is economically disadvantageous.

### sol. Al: 0.001% or more and less than 3.00%

Al acts as a deoxidizing agent and is preferably added in the deoxidation process. To obtain such an effect, the content of sol. Al has to be made 0.001% or more. On the other hand, if the content of sol. Al is 3.00% or more, the danger of slab cracking at the time of continuous casting rises, so the content is made less than 3.00%.

### N: 0.050% or less

N forms coarse nitrides and causes the bendability to deteriorate, so the amount of addition has to be kept down. This is because if N exceeds 0.050%, this tendency becomes more remarkable, so the range of content of N was made 0.050% or less. In addition, N becomes a cause of formation of blowholes at the time of welding, so the smaller the content the better. The lower limit value of the content of N is not particularly set in order for the effect of the present invention to be exhibited, but making the content of N less than 0.0005% invites a major increase in the manufacturing cost.

The softened surface layer part preferably has a composition which contains, by mass%,
C: less than 0.72%,
Si: 0.001% or more and less than 3.50%,
Mn: 2.5% or less
P: 0.10% or less,
S: 0.010% or less,
sol. Al: 0.001% or more and less than 3.00%,
N: less than 0.050%, and
a balance of iron and unavoidable impurities. The softened surface layer part can further include the following constituents:

### Cr: 0.01% or more and 2.00% or less, Mo: 0.01% or more and 2.00% or less, Cu: 0.01% or more and 2.00% or less, and Ni: 0.01% or more and 2.00% or less

Cr, Mo, Cu, and Ni are elements improving the strength of the steel sheet, so may be included. The steel sheet may contain one or more elements selected from a group consisting of Cr, Mo, Cu, and Ni in respectively 0.01% or more. However, if the steel sheet excessively contains these elements, the strength of the steel sheet will become too high and sometimes surface scratches will be easily formed at the time of rolling. Therefore, the upper limit values of the respective contents of the one or more elements selected from a group consisting of Cr, Mo, Cu, and Ni are made 2.00%.

Further, the total of the amount of Cr and the amount of Mo in the softened surface layer part is preferably 0.9 time or less the total of the amount of Cr and the amount of Mo in the center part in the sheet thickness. If the total of the amount of Cr and amount of Mo stabilizing the carbides is larger than 0.9 time the total of the amount of Cr and the amount of Mo in the center part in the sheet thickness, coarse carbides easily remain and become causes of deterioration of the surface properties. More preferably, the amount is 0.7 time or less, still more preferably 0.5 time or less, most preferably 0.3 time or less.

Further, the total of the amount of Cu and the amount of Ni in the softened surface layer part is preferably 0.9 time or less the total of the amount of Cu and the amount of Ni in the center part in the sheet thickness. If the total of the amount of Cu and amount of Ni improving the hardenability is larger than 0.9 time the total of the amount of Cu and the amount of Ni in the center part in the sheet thickness, low temperature transformed structures are easily formed and become causes of deterioration of the bendability. More preferably, the amount is 0.7 time or less, still more preferably 0.5 time or less, most preferably 0.3 time or less.

### Ti: 0.005% or more and 0.30% or less, Nb: 0.005% or more and 0.30% or less, V: 0.005% or more and 0.30% or less, and W: 0.005% or more and 0.30% or less

Ti, Nb, V, and W are elements forming fine carbides, nitrides, or carbonitrides, so are effective for improvement of the strength of the steel sheet. Therefore, the steel sheet may contain one or more elements selected from a group consisting of Ti, Nb, V, and W. To obtain the effect of improvement of the strength of the steel sheet, the lower limit values of the respective contents of the one or more elements selected from a group consisting of Ti, Nb, V, and W are preferably made 0.005%. On the other hand, if including these elements in excess, the hot rolled steel sheet rises in strength too much and the sheet may crack at the time of cold rolling. Therefore, the upper limit values of the respective contents of the one or more elements selected from a group consisting of Ti, Nb, V, and W are made 0.30%.

Further, the total of the amount of Ti and the amount of Nb in the softened surface layer part is preferably made 0.9 time or less of the total of the amount of Ti and the amount of Nb in the center part in the sheet thickness. If the total of the amount of Ti and the amount of Nb is larger than 0.9 time the total of the amount of Ti and the amount of Nb in the center part in the sheet thickness, the surface layer easily hardens and becomes a cause of deterioration of the bendability. More preferably, the total is 0.7 time or less, still more preferably 0.5 time or less, most preferably 0.3 time or less.

Further, the total of the amount of W and the amount of V in the softened surface layer part is preferably made 0.9 time or less of the total of the amount of W and the amount of V in the center part in the sheet thickness. Since W and V are elements which easily form carbides, if the total of the amount of W and the amount of V is larger than 0.9 time the total of the amount of W and the amount of V in the center part in the sheet thickness, the surface layer is formed with coarse carbides which become a cause of deterioration of the bendability. More preferably, the total is 0.7 time or less, still more preferably 0.5 time or less, most preferably 0.3 time or less.

### B: 0.0001% or more and 0.010% or less, Ca: 0.0001% or more and 0.010% or less, Mg: 0.0001% or more and 0.010% or less, Zr: 0.0001% or more and 0.010% or less, and REM: 0.0001% or more and 0.010% or less

B, Ca, Mg, Zr, and REM improve the local ductility and hole expandability of the steel sheet. To obtain this effect, the respective lower limit values of the one or more elements selected from a group consisting of B, Ca, Mg, Zr, and REM are preferably made 0.0001%, more preferably 0.001%. On the other hand, if the amounts of B, Ca, Mg, Zr, and REM are larger than 0.9 time the center part in the sheet thickness, the surface layer hardens too much and sometimes the surface properties are made to deteriorate. Therefore, the upper limit values of the one or more elements selected from a group consisting of B, Ca, Mg, Zr, and REM are made 0.009%, preferably 0.006% or less.

Further, the amount of B in the softened surface layer part is preferably 0.9 time or less the amount of B in the center part in the sheet thickness. B is an element easily forming low temperature transformed phases, so if larger than 0.9 time the amount of B in the center part in the sheet thickness, the surface layer becomes hard and becomes a cause for excellent bendability not being able to be obtained. The amount is more preferably 0.7 time or less, still more preferably 0.5 time or less, most preferably 0.3 time or less. The lower limit value is not prescribed.

### 4. Structure of Steel Sheet

The structure of the steel sheet according to the present embodiment will be explained next.

The structure of the center part in the sheet thickness preferably includes structures comprised of ferrite, martensite, or bainite and residual austenite, more preferably includes structures comprised of ferrite, tempered martensite or bainite, hardened martensite, and residual austenite.

The structure of the softened surface layer part preferably has structures made up of substantially ferrite.

The softened surface layer part has a low porosity. It has an area ratio of preferably 1% or less, more preferably substantially 0%.

### 5. Mechanical Properties of Steel Sheet

The mechanical properties of the steel sheet according to the present embodiment will be explained next.

The tensile strength of the steel sheet according to the present embodiment is preferably 780 MPa or more, more preferably 1180 MPa. This is so as to reduce the sheet thickness and contribute to lighter weight by raising the strength when using the steel sheet as a material for automobiles. Further, to provide the steel sheet according to the present embodiment for press forming use, the uniform elongation (uEL) is preferably excellent. The TSxuEL is preferably 12000 MPa·% or more, more preferably 14000 MPa·% or more.

Further, regarding the bendability, for types of steel having a strength of 780 MPa or more and less than 1180 MPa, a limit radius of curvature R preferably becomes 1.0 mm or less, more preferably 0.8 mm or less, when performing a V-bending test based on JIS Z2248 so that a direction vertical to the rolling direction becomes the longitudinal direction (bending ridgeline matches rolling direction). 0.8 mm or less is more preferable. For types of steel having a strength of 1180 MPa or more, the limit bending radius of the above V-bending test preferably becomes 2.0 mm or less, more preferably becomes 1.5 mm or less.

### 6. Method of Production

Next, the method of producing the steel sheet according to the present embodiment will be explained. The following explanation is intended to simply illustrate the process for obtaining the high strength steel sheet of the present invention and is not intended to limit the high strength steel sheet of the present invention to the multilayer steel sheet obtained by stacking two steel sheets such as explained below. For example, instead of the stacking method described below, it is also possible to form a softened surface layer part on a base material steel sheet by the cold spray method.

The steel sheet according to the present embodiment is produced by superposing on one surface or both surfaces of the base material steel sheet which constitutes the center part in the sheet thickness having the above chemical composition the above softened surface layer part-use steel sheet having an average Mn concentration of 2.5 mass% or less so as to form a multilayer steel sheet, welding its circumference, hot rolling the multilayer steel sheet and, after rolling, immediately cooling it, holding it at a high temperature, then cooling it, pickling the hot rolled steel sheet, then cold rolling and annealing it.

Formation of multilayer steel sheet: Degreasing the surface of the base material steel sheet which constitutes the center part in the sheet thickness, superposing on one surface or both surfaces of that base material steel sheet a steel sheet satisfying the chemical composition of the softened surface layer part, and welding the circumference

A base material steel sheet satisfying the chemical composition of the center part in the sheet thickness has superposed on its surface a steel sheet satisfying the chemical composition of the softened surface layer part and the circumference is welded to form a multilayer steel sheet. The steel sheets may be produced by any method so long as satisfying the above chemical compositions.

### Heating temperature of multilayer steel sheet: 1080°C or more and 1300°C or less

With a heating temperature before hot rolling of less than 1080°C, the deformation resistance at the time of hot working becomes higher and the operation becomes difficult. On the other hand, if the heating temperature becomes greater than 1300°C, due to scale loss, the yield falls. Therefore, the heating temperature is made 1080°C or more and 1300°C or less. The time for holding the steel at a temperature region of 1080°C or more and 1300°C or less before hot rolling is not particularly limited, but to improve the hole expandability, 30 minutes or more is preferable. 1 hour or more is more preferable. Further, to suppress excessive scale loss, making the time 10 hours or less is preferable and making it 5 hours or less is more preferable. Note that, when performing direct feed rolling or direct rolling, the steel may be held at the above temperature range while supplying it for hot rolling. In this Description, the "temperature" is the temperature measured at the center position of the surface of the steel sheet.

### Finish rolling start temperature: 800°C or more and 1000°C or less

The finish rolling start temperature is preferably 800°C or more and 1000°C or less. By making the finish rolling start temperature 800°C or more, it is possible to reduce the deformation resistance at the time of rolling. On the other hand, by making the finish rolling start temperature 1000°C or less, it is possible to suppress deterioration of the surface properties of the steel sheet due to grain boundary oxidation.

### Cooling after rolling: Cooling within 2 seconds to 500°C or more and 700°C or less

The steel is cooled to 500°C or more and 700°C or less within 2 seconds after the end of the finish rolling. This is an important condition in the present invention. By making the prior γ grains of the softened surface layer part finer and making the ferrite grains formed at the time of cooling uniformly finer, it is possible to make the softened surface layer part sufficiently recrystallize at the later annealing process.

If the time from the end of finish rolling until cooling to 500°C or more and 700°C or less exceeds 2 seconds, the prior austenite grains will become coarser in size and the softened surface layer part will not sufficiently recrystallize in the later annealing process. For this reason, the time from the end of finish rolling until cooling to 500°C or more and 700°C or less is made within 2 seconds. Preferably, it is within 1.8 seconds, more preferably within 1.5 seconds. The shorter the time until cooling, the more refined the prior γ grains in size and the easier the recrystallization, so no lower limit is set, but due to restrictions in the manufacturing process, 0.1 second becomes the substantive lower limit.

The cooling rate may be any rate so long as satisfying the above conditions, but the faster the cooling rate, the easier it is to obtain the effect of refinement of the prior γ grains. For this reason, the cooling rate is preferably made 20°C/s or more, still more preferably 50°C/s or more.

If the cooling stop temperature after rolling is less than 500°C, part of the softened surface layer part becomes low temperature transformed structures. If having a plurality of structures of ferrite and low temperature transformed structures, deformation is unevenly introduced at the time of cold rolling, so recrystallization does not uniformly occur and nonrecrystallized structures easily remain. With a cooling stop temperature of 700°C or more, ferrite transformation of the softened surface layer part is delayed, so in the subsequent cold rolling process, sufficient strain cannot be built up at the softened surface layer part. Therefore, the cooling stop temperature is made 500°C or more and 700°C or less.

### Holding time after cooling to temperature of 500°C or more and 700°C or less: 3 seconds or more

If the holding time at the temperature of 500°C or more and 700°C or less is less than 3 seconds, ferrite does not sufficiently form at the softened surface layer part. Preferably, the holding time is 5 seconds or more, more preferably 10 seconds or more.

### Coiling temperature: 600°C or less

Preferably, the sheet is coiled at a coiling temperature of 600°C or less. By coiling at a coiling temperature of 600°C or less, low temperature transformed phases easily form at the center part in the sheet thickness and the amount of strain distributed at the surface layer in the cold rolling process after coiling increases, so the softened surface layer part easily recrystallizes and the crystal grain size can be more easily refined. Further, by making the coiling temperature 600°C or less, in the pickling after coiling, removal of scale becomes more easy. The coiling temperature is more preferably 500°C or less, still more preferably 400°C or less.

To suppress fracture at the time of cold rolling, the hot rolled sheet may be cooled down to room temperature, then tempered at 300°C or more and 600°C or less.

### Rolling reduction in cold rolling: 20% or more and 70% or less

The hot rolled steel sheet is pickled by an ordinary method, then cold rolled. If the rolling reduction in cold rolling is less than 20%, sufficient strain is not introduced into the softened surface layer part and the softened surface layer part does not sufficiently recrystallize in the subsequent annealing process. On the other hand, if the rolling reduction in the cold rolling is greater than 70%, sometimes the steel sheet will break during rolling, so the rolling reduction in cold rolling is made 20% or more and 70% or less.

Annealing heat treatment after cold rolling: Holding rolled multilayer steel sheet at temperature of 600°C or more and 750°C or less for 5 seconds or more, then cooling down to room temperature

The cold rolled multilayer steel sheet is heated to a temperature of 600°C or more and 750°C or less to anneal it. If the heating and holding temperature is less than 600°C, the softened surface layer part will not sufficiently recrystallize and on top of that the cementite at the center part in the sheet thickness will not sufficiently dissolve and a stable residual γ fraction will not be obtained. If greater than 750°C, ferrite will become difficult to form at the center part in the sheet thickness. Therefore, the heating and holding temperature is made 600°C or more and 750°C or less.

If the holding time is less than 5 seconds, the nonrecrystallized structures at the softened surface layer part will not sufficiently recrystallize. To completely remove nonrecrystallized structures, it is preferable to make the annealing time 10 seconds or more, more preferably 15 seconds or more. From the viewpoint of the productivity, the annealing time is preferably made 3600 seconds or less.

The cooling stop temperature after the above heating and holding step is preferably 550°C or less so as to make low temperature transformed structures form at the center part in the sheet thickness, more preferably 300°C or less, most preferably 100°C or less.

After the above cooling, to soften the low temperature transformed structures and stabilize the residual austenite, the sheet may be tempered at a temperature of 300°C or more and 550°C or less.

If hot dip galvanizing the surface of the steel sheet to produce a hot dip galvanized steel sheet, the cooling after the annealing at the above temperature of 600°C or more and 750°C or less is stopped at a temperature range of 430 to 500°C, then the cold rolled steel sheet is dipped in a plating bath of molten zinc for hot dip galvanization. The conditions of the plating bath may be made the usual ranges. After the plating, the steel sheet may be cooled down to room temperature.

If galvannealing the surface of the steel sheet to produce a hot dip galvannealed steel sheet, the steel sheet is hot dip galvanized, then, before cooling the steel sheet down to room temperature, the hot dip galvanization of the steel sheet is alloyed at a temperature of 450 to 620°C. The alloying conditions may be made the usual ranges.

By producing the steel sheet in the above way, it is possible to obtain the steel sheet according to the present embodiment.

### EXAMPLES

The steel sheet of the present invention will be explained more specifically with reference to examples. However, the following examples are illustrations of the steel sheet of the present invention. The steel sheet of the present invention is not limited to the modes of the following examples.

### 1. Production of Steel Sheet for Evaluation Use

Samples obtained by use of the clad method for the method of producing the multilayer steel sheets described in Table 2 were prepared in accordance with the following method. A continuously cast slab of a thickness of 20 mm having each of the chemical compositions shown in Table 1 (the center part in the sheet thickness-use steel sheet) was ground down at its surface to remove the surface oxides, then was clad at one surface or both surfaces with a surface layer-use steel sheet (softened surface layer part) having the chemical composition shown in Table 1 by arc welding. This was heated, held after heating, hot rolled, cooled, held after cooling, and taken up in a coil by the heating temperature, holding time before hot rolling, finish rolling start temperature, cooling completion time, cooling stop temperature, holding time after cooling, and coiling temperature shown in Table 2 to obtain a multilayer hot rolled steel sheet. After that, the steel sheet was pickled by an ordinary method and tempered, cold rolled, and annealed by the tempering temperature, cold rolling rate, annealing temperature, and annealing time shown in Table 2 and then cooled down to room temperature.

Samples obtained by use of the cold spray method for the method of producing the multilayer steel sheets described in Table 2 were prepared in accordance with the following method.

If making the substrate a hot rolled sheet, a continuously cast slab of a thickness of 20 mm having each of the chemical compositions shown in Table 1 (the center part in the sheet thickness-use steel sheet) was heated, held after heating, hot rolled, cooled, held after cooling, and taken up in a coil by the heating temperature, holding time before hot rolling, finish rolling start temperature, cooling completion time, cooling stop temperature, holding time after cooling, and coiling temperature shown in Table 2 to prepare a hot rolled sheet. This was ground down at its surface to remove the surface oxides, then was formed on one surface or both surfaces with a deposited layer (surface layer) on the surface layer by the cold spray method. After that, this was tempered, cold rolled, and annealed at the tempering temperature, cold rolling rate, annealing temperature, and annealing time shown in Table 2, then was cooled down to room temperature.

On the other hand, if making the substrate a cold rolled sheet, a hot rolled sheet prepared by the above method was pickled by an ordinary method and tempered and cold rolled by the tempering temperature and cold rolling rate shown in Table 2 to prepare a cold rolled sheet, then the cold spray method was used to form a deposited layer (surface layer) on at least one surface of the cold rolled sheet and then this was annealed at the annealing temperature and annealing time shown in Table 2, then was cooled down to room temperature.

For the iron-based particles used in the cold spray method, ones with the constituents and particle sizes shown in Table 4 were used. For the particles used for the cold spray method, ones obtained by repeated crushing and sieving for classification to adjust them to become predetermined particle sizes in accordance with the prior art were used. Further, as the working gas, nitrogen gas was used. A heater was used to heat the working gas to 700°C, iron-based particles were supplied from a particle feed device to be mixed with this, then the mixture was sprayed on the substrate by spray nozzles to obtain the multilayer steel sheet. Note that, the working gas pressure was made a constant 3 MPa. Further, the scan speed of the nozzles was adjusted by mechanical control.

### [Table 1-1]

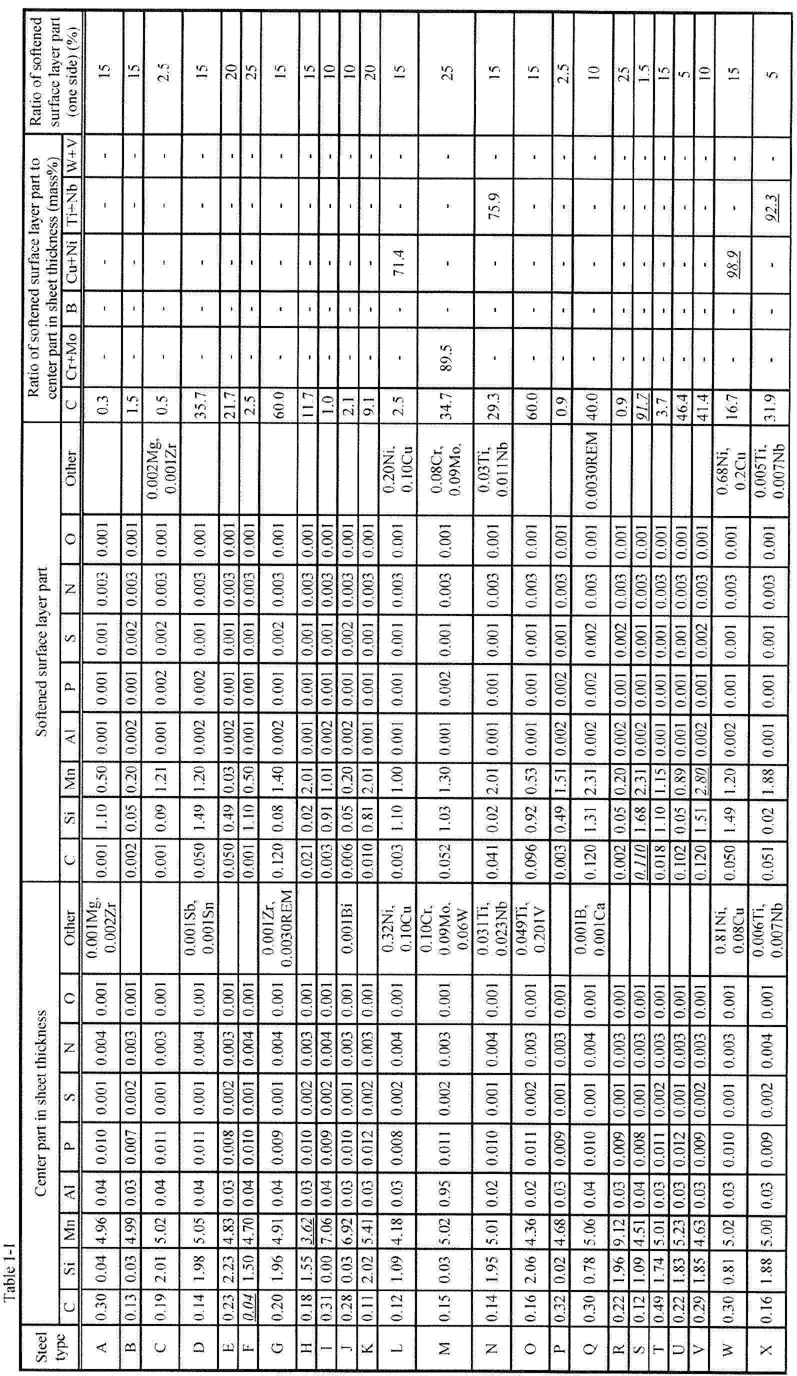

### [Table 1-2]

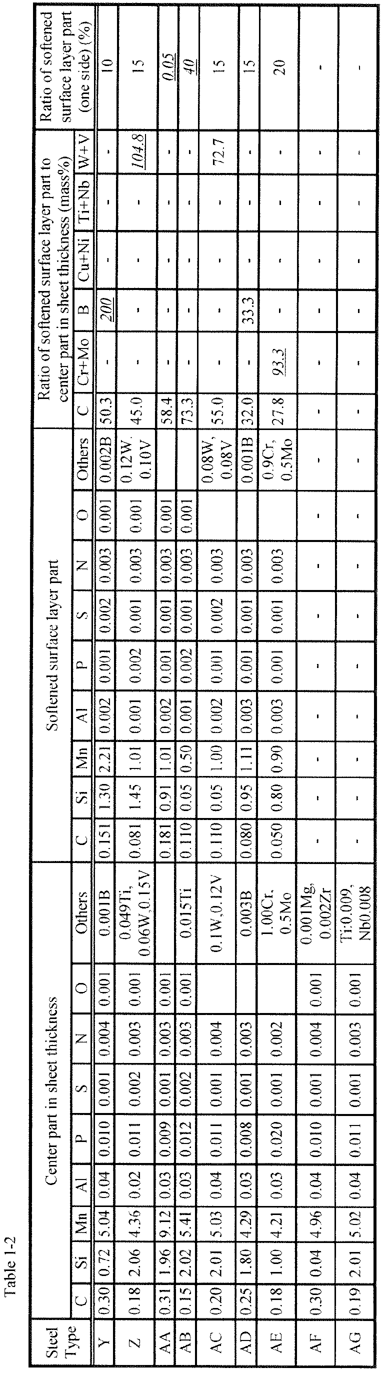

### [Table 2-2]

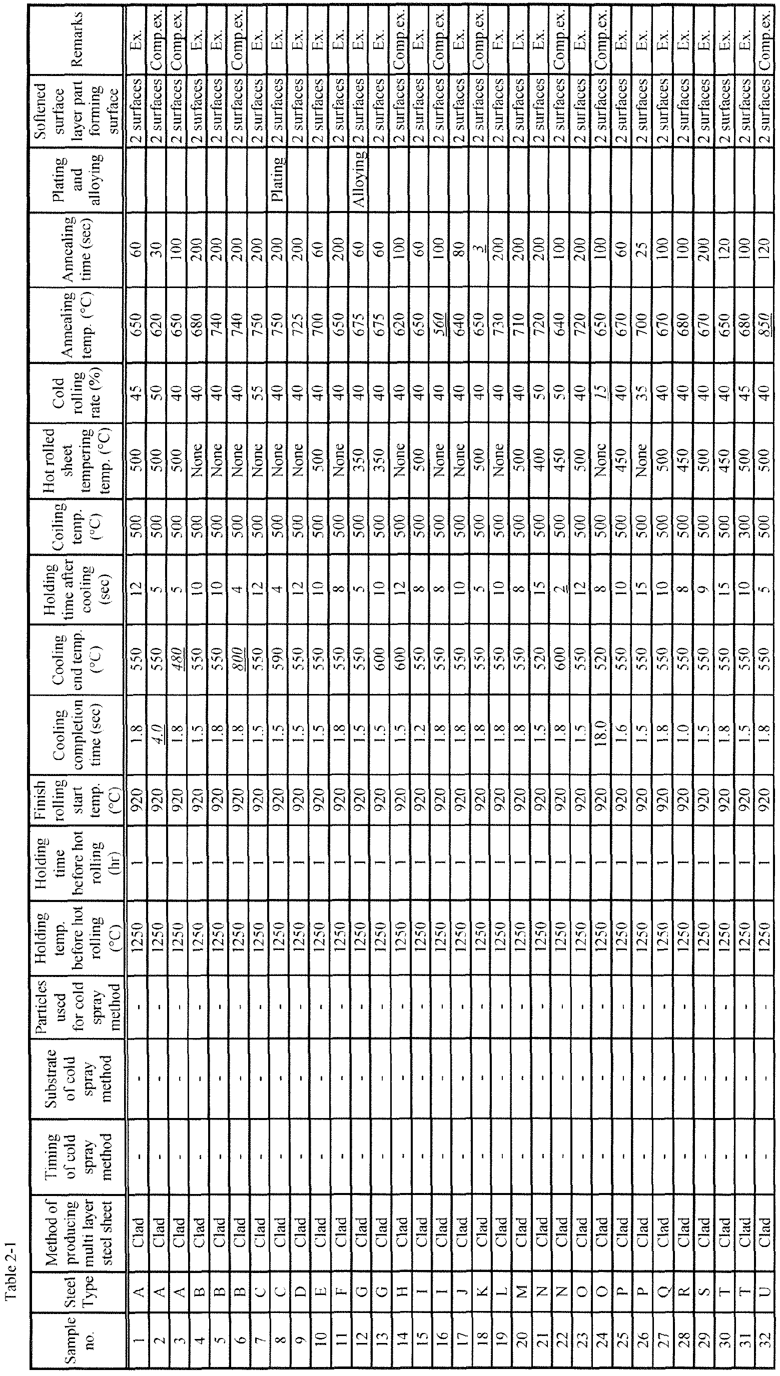

### [Table 2-2]

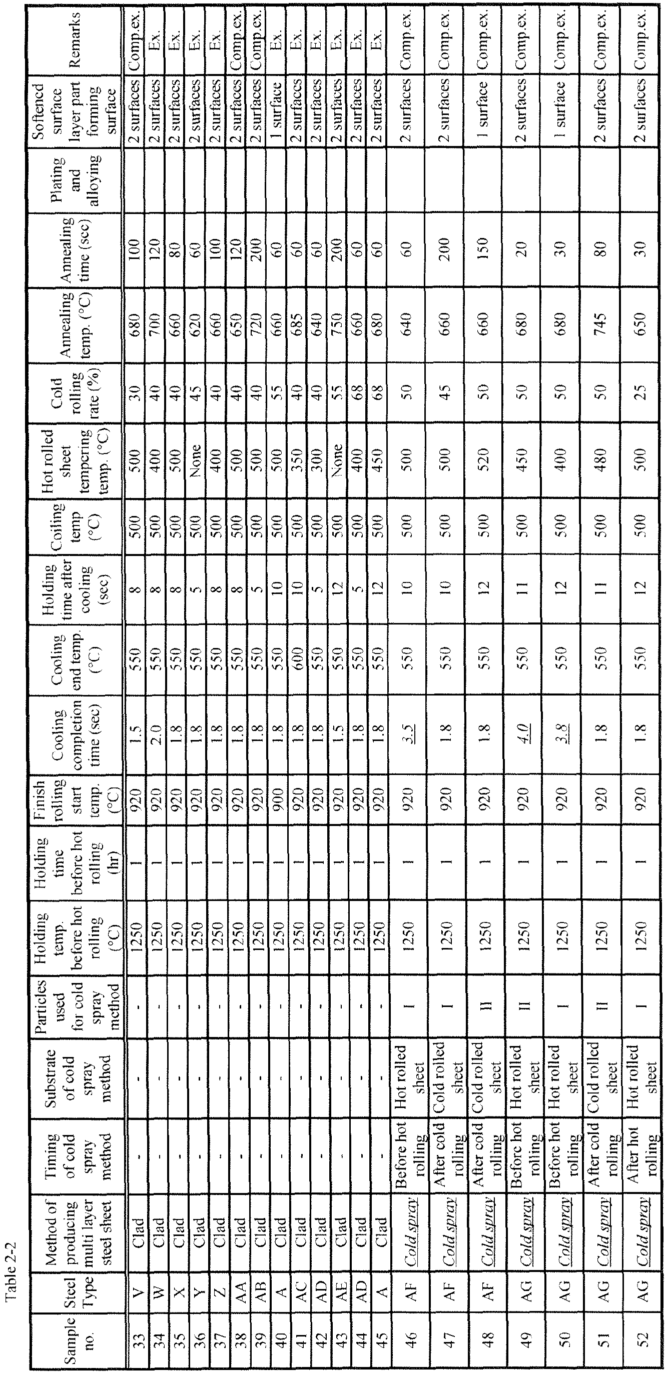

For some of the annealed cold rolled steel sheets, after the final annealing was performed, the cooling process after the annealing was stopped at 460°C and the cold rolled steel sheets were dipped in a 460°C molten zinc plating bath for 2 hours to hot dip galvanize them. The conditions of the plating bath were the same as those in the past. If not performing the later explained alloying, the sheets were held at 460°C, then they were cooled by an average cooling rate of 10°C/s down to room temperature.

For some of the annealed cold rolled steel sheets, after the hot dip galvanization, rather than cooling them down to room temperature, they were then alloyed. They were heated to 520°C and held at 520°C for 5 seconds for alloying. After that, the sheets were cooled by an average cooling rate of 10°C/s down to room temperature.

The thus obtained annealed cold rolled steel sheets were temper rolled by an elongation rate of 0.1% to prepare various steel sheets for evaluation use.

### 2. Method of Evaluation

The obtained annealed cold rolled steel sheets were measured for sheet thickness, observed in structure, measured for porosity of the softened surface layer part, tested for Vickers hardness, tested to measure the recrystallization rate by the SEM/EBSD method, measured for average crystal grain size of the softened surface layer part, tested for tensile strength, tested for uniform elongation, and tested by V-bending.

The structure of the center part in the sheet thickness was observed by the following method. The surface of each steel sheet was polished by mirror polishing and colloidal polishing to make the center part of the sheet thickness become the measurement surface. A field emission type scan electron microscope (FE-SEM) and OIM crystal orientation analysis apparatus were used to obtain a group of crystal orientation data at 0.2 µm intervals at a 100 µm square region of the measurement surface. The group of obtained crystal orientation data was analyzed by analysis software (TSL OIM Analysis) to classify the structures. In the Phase-MAP, regions judged to be austenite phases were judged as residual austenite. In the Phase-MAP, the structures of regions judged as ferrite phases other than austenite phases, including tempered martensite, bainite, as-quenched martensite, and ferrite, were observed by a 3000X power and were further judged as follows based on the secondary electron images. At the ferrite phases, among those having lower structures in the grains, structures including cementite inside were judged to be tempered martensite or bainite. At the ferrite phases, among those having lower structures in the grains, structures not including cementite inside were judged to be as-quenched martensite. At the ferrite phases, regions not having lower structures in the grains were judged to be ferrite.

The above method was used to observe the structures. The structures at the center part in the sheet thickness were classified into ferrite, tempered martensite or bainite, as-quenched martensite, and residual austenite.

The structures of the softened surface layer part were observed by the same method as observation of the structures at the center part in the sheet thickness other than the softened surface layer part becoming the measured surface. The structures at the softened surface layer part were substantially ferrite.

The porosity of the softened surface layer part was obtained by identifying the pores at the polished surface and calculating the area ratio by image processing. The porosity of the softened surface layer part was obtained by observation by a scan type electron microscope by a power of 1000X, using image processing to detect pores of a diameter of 0.01 µm or more, and calculating the area rate of the total.

The Vickers hardness test, as explained above, was performed for defining the softened surface layer part. First, the cross-sectional structure of the steel sheet was revealed by Nital corrosion. A structural image was obtained by observation by an optical microscope or scan type electron microscope. Based on this, the total thickness of the steel sheet was calculated. At the center of the steel sheet in the sheet thickness direction, the Vickers hardnesses were measured at an indentation load of 100 g at five points in the direction vertical to the sheet thickness direction at indentation intervals where the indentations will not interfere with each other. The average value of these was defined as the average Vickers hardness at the center position in the sheet thickness direction. Next, a Vickers hardness test was conducted at five points in the same way as the above from the center in the sheet thickness direction toward the surface at indentation intervals of fixed intervals of 5% of the total thickness of the steel sheet at different sheet thickness direction positions. When the average Vickers hardness at a certain sheet thickness direction position became 0.6 time or less of the average Vickers hardness at the center position in the sheet thickness direction, the surface side from that position was defined as the softened surface layer part. If a value of 0.6 time or less of the average Vickers hardness could not be obtained at indentations at 5% intervals and the softened surface layer part could not be defined, the softened surface layer part was defined by performing indentation while making the interval between two indentation points of the surface layer any fixed interval shorter than the initial indentation intervals. The ratio of the thickness of the softened surface layer part-use steel sheet to the sheet thickness of the center part in the sheet thickness-use steel sheet was as shown in the "Ratio of softened surface layer part (one side) (%)" of Table 3.

In the test for measuring the recrystallization rate using the SEM/EBSD method, the surface of the steel sheet was polished by mirror polishing and colloidal polishing to make the center position of the softened surface layer part defined by the above-mentioned method become the measurement surface. A field emission type scan electron microscope (FE-SEM) and OIM crystal orientation analysis apparatus were used to obtain a group of crystal orientation data at 0.2 µm intervals at a 100 µm square region of the measurement surface. The group of obtained crystal orientation data was analyzed by analysis software (TSL OIM Analysis). A region with a kernel average misorientation (KAM value) between first proximity measurement points of 1.0° or less was defined as a recrystallized structure. The area ratio of this region to the entire region was calculated.

The average crystal grain size of the softened surface layer part was measured as follows. In a test for measuring the average crystal grain size by the SEM/EBSD method, the group of crystal orientation data obtained by the above-mentioned method was analyzed by analysis software (TSL OIM analysis). A region surrounded by crystal grain boundaries having a difference of orientation of a crystal orientation difference of 15° or more was defined as one crystal grain. The particle size at this time was calculated by the area fraction method. The average particle size of the observed region as a whole was calculated.

A JIS No. 5 test piece was taken with a long axis along a direction perpendicular to the rolling direction of the steel sheet and was measured for tensile strength (TS) and uniform elongation (uEL). The tensile test was performed by the method prescribed in JIS Z 2241 using a JIS No. 5 tensile test piece. The uniform elongation test was performed by the method prescribed in JIS Z 2201 using a JIS No. 5 test piece with a parallel part length of 50 mm.

The limit radius of curvature R was found by preparing a No. 1 test piece described in JIS Z 2204 so that the direction vertical to the rolling direction becomes the longitudinal direction (bending ridgeline matches with rolling direction) and conducting a V-bending test based on JIS Z2248. Samples having softened surface layer parts at only single surfaces were bent so that the surfaces having the softened surface layer parts became the outside of the bend. The angle of the die and punch was made 60° and the radius of the front end of the punch was changed in 0.1 mm units to conduct the bending test. The radius of the front end of the punch at which bending was possible without cracking occurring was found as the limit radius of curvature R. Types of steel with a strength of 780 MPa or more and less than 1180 MPa which had a limit radius of curvature R of greater than 1.0 mm were evaluated as unbendable ("poor"), ones of 1.0 mm or less were evaluated as good in bendability ("good"), while ones of 0.8 mm or less were evaluated as excellent in bendability ("very good"). Types of steel with a strength of 1180 MPa or more which had a limit radius of curvature R of greater than 2.0 mm were evaluated as unbendable ("poor"), ones of 2.0 mm or less were evaluated as good in bendability ("good"), while ones of 1.5 mm or less were evaluated as excellent in bendability ("very good").

The obtained steel sheets were measured for chemical compositions at the center positions in sheet thickness direction of the softened surface layer parts defined above and the chemical compositions at the center positions in the sheet thickness direction, whereupon they were substantially the same as the chemical compositions of the softened surface layer part-use steel sheets and base material steel sheets shown in Table 1.

The average Mn concentrations were found by measuring by EPMA the Mn concentrations at 20 points at 50 µm intervals along lines in a direction vertical to the sheet thickness directions at centers in sheet thickness directions of the center parts in the sheet thickness and the softened surface layer part at structural cross-sections and averaging the same. As a result, the average Mn concentration of the center part in the sheet thickness and the average Mn concentration of the softened surface layer part were substantially the same as the Mn concentrations of the base material steel sheets and softened surface layer part-use steel sheets shown in Table 1.

### 3. Results of Evaluation

The results of the above evaluation are shown in Table 3.

### [Table 3-1]

**Table 3-1**

| Sample no. | Type of steel | Sheet thickness (mm) | Ratio of softened surface layer part (one side) (%) | Recrystallization rate of softened surface layer part (%) | Average crystal grain size of softened surface layer part (µm) | Surface layer porosity (%) | TS (MPa) | uEL (%) | TS×uEL | Bendability | Remarks |
|---|---|---|---|---|---|---|---|---|---|---|---|
| 1 | A | 1.7 | 10 | 96 | 28 | 0 | 956 | 14.8 | 14149 | Very good | Ex. |
| 2 | A | 1.7 | 10 | *76* | 18 | 0 | 1125 | 3.5 | *3938* | *Poor* | Comp.ex. |
| 3 | A | 1.7 | 10 | *88* | 21 | 0 | 942 | 3.3 | *3109* | *Poor* | Comp.ex. |
| 4 | B | 1.6 | 10 | 97 | 30 | 0 | 851 | 19.5 | 16595 | Good | Ex. |
| 5 | B | 1.6 | 10 | 98 | 26 | 0 | 1145 | 12.5 | 14313 | Very good | Ex. |
| 6 | B | 1.6 | 10 | 65 | 22 | 0 | 1050 | 9.6 | *10080* | *Poor* | Comp.ex. |
| 7 | C | 1.6 | 2.5 | 96 | 29 | 0 | 1250 | 12.1 | 15125 | Very good | Ex. |
| 8 | C | 1.6 | 2.5 | 95 | 30 | 0 | 1255 | 11.8 | 14809 | Good | Ex. |
| 9 | D | 1.6 | 15 | 95 | 29 | 0 | 1076 | 17.9 | 19260 | Very good | Ex. |
| 10 | E | 1.5 | 15 | 96 | 24 | 0 | 1171 | 16.9 | 19790 | Very good | Ex. |
| 11 | F | 1.4 | 20 | 98 | 27 | 0 | 793 | 15.2 | 12054 | Very good | Ex. |
| 12 | G | 1.5 | 15 | 97 | 30 | 0 | 1034 | 13.7 | 14166 | Very good | Ex. |
| 13 | G | 1.5 | 15 | 95 | 28 | 0 | 1012 | 14.2 | 14370 | Good | Ex. |
| 14 | H | 1.4 | 10 | 95 | 27 | 0 | 1026 | 11.1 | *11389* | Very good | Comp.ex. |
| 15 | I | 1.7 | 10 | 96 | 29 | 0 | 1511 | 9.3 | 14052 | Very good | Ex. |
| 16 | I | 1.7 | 10 | *85* | 22 | 0 | 1241 | *2.3* | *2854* | *Poor* | Comp.ex. |
| 17 | J | 1.6 | 5 | 98 | 28 | 0 | 1366 | 15.3 | 20900 | Very good | Ex. |
| 18 | K | 1.5 | 15 | *62* | 20 | 0 | 921 | 3.6 | *3316* | *Poor* | Comp.ex. |
| 19 | L | 1.5 | 15 | 96 | 27 | 0 | 903 | 22.1 | 19956 | Very good | Ex. |
| 20 | M | 1.7 | 20 | 95 | 30 | 0 | 899 | 17.6 | 15822 | Very good | Ex. |
| 21 | N | 1.6 | 15 | 95 | 29 | 0 | 1136 | 12.4 | 14086 | Very good | Ex. |
| 22 | N | 1.6 | 15 | 43 | 22 | 0 | 1089 | 9.2 | *10019* | *Poor* | Comp.ex. |
| 23 | O | 1.6 | 15 | 95 | 32 | 0 | 1222 | 11.5 | 14053 | Very good | Ex. |
| 24 | O | 1.6 | 15 | 72 | 28 | 0 | 1099 | 13.1 | 14397 | *Poor* | Comp.ex. |
| 25 | P | 1.6 | 2.5 | 97 | 25 | 0 | 1385 | 12.1 | 16759 | Very good | Ex. |
| 26 | P | 1.6 | 2.5 | 91 | 30 | 0 | 1018 | 14.1 | 14354 | Good | Ex. |
| 27 | 0 | 1.7 | 10 | 96 | 30 | 0 | 1291 | 15.2 | 19623 | Very good | Ex. |
| 28 | R | 1.5 | 20 | 99 | 28 | 0 | 1061 | 13.2 | 14005 | Very good | Ex. |
| 29 | S | 1.7 | 1.5 | 94 | 22 | 0 | 1182 | 11.3 | 13357 | Good | Ex. |
| 30 | T | 1.6 | 15 | 95 | 31 | 0 | 1312 | 15.1 | 19811 | Good | Ex. |
| 31 | T | 1.6 | 15 | 98 | 24 | 0 | 1199 | 16.3 | 19544 | Very good | Ex. |
| 32 | U | 1.6 | 5 | 90 | 36 | 0 | 1175 | 8.1 | *9518* | Good | Comp.ex. |
| 33 | V | 1.2 | 10 | 96 | 31 | 0 | 1256 | 12.6 | 15826 | *Poor* | Comp.ex. |
| 34 | W | 1.2 | 10 | 91 | 28 | 0 | 1466 | 9.2 | 13487 | Good | Ex. |
| 35 | X | 1.6 | 5 | 92 | 27 | 0 | 1146 | 10.5 | 12033 | Good | Ex. |

### [Table 3-2]

**Table 3-2**

| Sample no. | Type of steel | Sheet thickness (mm) | Ratio of softened surface layer part (one side) (%) | Recrystallization rate of softened surface layer part (%) | Average crystal grain size of softened surface layer part (µm) | Surface layer porosity (%) | TS (MPa) | uEL (%) | TS×uEL | Bendability | Remarks |
|---|---|---|---|---|---|---|---|---|---|---|---|
| 36 | Y | 1.3 | 10 | 91 | 29 | 0 | 1366 | 19.8 | 13387 | Good | Ex. |
| 37 | Z | 1.3 | 15 | 92 | 22 | 0 | 1205 | 10.1 | 12171 | Good | Ex. |
| 38 | AA | 2.8 | *0.05* | 93 | 26 | 0 | 1553 | 17.91 | 12269 | *Poor* | Comp.ex. |
| 39 | AB | 16 | *35* | 98 | 23 | 0 | *663* | 18.31 | 12133 | Very good | Comp.ex. |
| 40 | A | 1.6 | 10 | 98 | 26 | 0 | 11086 | 13.9 | 15095 | Very good | Ex. |
| 41 | AC | 1.6 | 15 | 96 | 26 | 0 | 1311 | 14.9 | 19534 | Very good | Ex. |
| 42 | AD | 1.7 | 15 | 93 | 24 | 0 | 1329 | 13.6 | 18074 | Very good | Ex. |
| 43 | AE | 1.4 | 15 | 91 | 35 | 0 | 1302 | 9.4 | 12239 | Good | Ex. |
| 44 | AD | 1.2 | 15 | 98 | 20 | 0 | 1215 | 15.8 | 19197 | Good | Ex. |
| 45 | A | 1.0 | 15 | 97 | 22 | 0 | 1011 | 15.2 | 15367 | Good | Ex. |
| 46 | AF | 1.2 | 5 | *78* | 22 | 0 | 1011 | 13.2 | 13345 | *Poor* | Comp.ex. |
| 47 | AF | 1.2 | 10 | 94 | *45* | *4* | 1122 | 11.6 | 13015 | *Poor* | Comp.ex. |
| 48 | AF | 1.2 | 10 | 92 | *41* | *5* | 1110 | 11.9 | 13209 | *Poor* | Comp.ex. |
| 49 | AG | 1.6 | 5 | *73* | 29 | 0 | 1002 | 13.6 | 13627 | *Poor* | Comp.ex. |
| 50 | AG | 1.6 | 5 | *76* | 24 | 0 | 1052 | 12.7 | 13360 | *Poor* | Comp.ex. |
| 51 | AG | 1.6 | 10 | 91 | *42* | *6* | 1226 | 10.8 | 13241 | *Poor* | Comp.ex. |
| 52 | AG | 1.6 | 10 | *83* | 36 | 1 | 1188 | 11.1 | 13187 | *Poor* | Comp.ex. |

### [Table 4]

**Table 4**

| Particle no. | Chemical constituents (mass%) | | | | | | | | Particle size (µm) |
|---|---|---|---|---|---|---|---|---|---|
| | C | Si | Mn | Al | P | S | N | Others | |
| I | 0.001 | 0.016 | 0.63 | 0.001 | 0.001 | 0.001 | 0.003 | | 10 |
| II | 0.008 | 0.500 | 0.56 | 0.002 | 0.001 | 0.001 | 0.003 | Ti:0.007, Nb0.007 | 10 |

The underlined numerical values in Tables 1 to 3 show that the contents, conditions, or mechanical properties shown by that numerical values are outside the desirable ranges.

The steel sheets of the examples in Tables 2 and 3 have average Mn concentrations of the center part in the sheet thickness of greater than 4.0 mass% and less than 10.0 mass%, have softened surface layer parts of thicknesses of 0.1% to 30% of the steel sheets, have average Mn concentrations of 2.5% or less, have recrystallization rates of the softened surface layer part of 90% or more, and have excellent TS×uEL balance, that is, have features of a steel sheet with a high concentration of contained Mn, while having excellent bendability.

On the other hand, Test Material Nos. 2, 3, 6, 16, 18, 22, 24, 46, 49, 50, and 52 in Tables 2 and 3 have recrystallization rates of the softened surface layer parts outside the range prescribed in the present invention, so excellent bendability is not obtained.

Test Material No. 14 is low in the average Mn concentration of the center part in the sheet thickness, so excellent TS×uEL balance is not obtained.

Test Material No. 32 is high in the annealing temperature, so excellent TS×uEL balance is not obtained.

Test Material No. 33 is high in the average Mn concentration of the softened surface layer part, so excellent bendability is not obtained.

Test Material No. 38 is small in thickness of the softened surface layer part, so excellent bendability is not obtained.

Test Material No. 39 is large in thickness of the softened surface layer part, so the strength is low.

Test Material Nos. 46, 49, 50, and 52 are multilayer steel sheets prepared by the cold spray method using hot rolled sheets as substrates, but the deposited layers (surface layers) are low in recrystallization rate, so excellent bendability is not obtained.

Test Material Nos. 47, 48, and 51 are multilayer steel sheets prepared by the cold spray method using cold rolled sheets as substrates, but the deposited layers (surface layers) have pores, so excellent bendability is not obtained. Further, the softened surface layer part have large average crystal grain sizes of the recrystallized structures, so excellent bendability is not obtained.

### INDUSTRIAL APPLICABILITY

According to the present invention, it is possible to obtain with a good production efficiency high strength steel sheet with a high Mn content excellent in bendability suitable as a material for automobile use. This is very advantageous industrially.

## Claims

1. A high strength steel sheet comprising
a center part in a sheet thickness and
a softened surface layer part on one surface or both surfaces of the center part in the sheet thickness,
**characterized in that**,
the center part in the sheet thickness has an average Mn concentration of greater than 4.0 mass% and less than 10.0 mass%,
each softened surface layer part has a thickness of 0.1% to 30% of the sheet thickness, and
the softened surface layer part has an average Mn concentration of 2.5 mass% or less, a recrystallization rate of 90% or more, and recrystallized structures with an average crystal grain size of 0.1 µm or more and 40 µm or less.

2. The high strength steel sheet according to claim 1, **characterized in that**
the center part in the sheet thickness contains, by mass%,
C: greater than 0.05% and less than 0.80%,
Si: 0.001% or more and less than 3.50%,
Mn: greater than 4.0% and less than 10.0%,
P: 0.10% or less,
S: 0.010% or less,
sol. Al: 0.001% or more and less than 3.00%,
N: less than 0.050%, and
a balance of iron and unavoidable impurities.

3. The high strength steel sheet according to claim 2, **characterized in that** the center part in the sheet thickness further contains, by mass%, at least one selected from a group consisting of
Cr: 0.01% or more and 2.00% or less,
Mo: 0.01% or more and 2.00% or less,
Cu: 0.01% or more and 2.00% or less, and
Ni: 0.01% or more and 2.00% or less.

4. The high strength steel sheet according to claim 2 or 3, **characterized in that**
the center part in the sheet thickness further contains, by mass%, at least one selected from a group consisting of
Ti: 0.005% or more and 0.30% or less,
Nb: 0.005% or more and 0.30% or less,
V: 0.005% or more and 0.30% or less, and
W: 0.005% or more and 0.30% or less.

5. The high strength steel sheet according to any one of claims 2 to 4, **characterized in that** the center part in the sheet thickness further contains, by mass%, at least one selected from a group consisting of
B: 0.0001% or more and 0.010% or less,
Ca: 0.0001% or more and 0.010% or less,
Mg: 0.0001% or more and 0.010% or less,
Zr: 0.0001% or more and 0.010% or less, and
REM: 0.0001% or more and 0.010% or less.

6. The high strength steel sheet according to any one of claims 2 to 5, **characterized in that** the center part in the sheet thickness further contains, by mass%, at least one selected from a group consisting of
Sb: 0.0005% or more and 0.050% or less,
Sn: 0.0005% or more and 0.050% or less, and
Bi: 0.0005% or more and 0.050% or less.

7. The high strength steel sheet according to any one of claims 2 to 6, **characterized in that** an amount of C in the softened surface layer part is 0.9 time or less of an amount of C in the center part in the sheet thickness.

8. The high strength steel sheet according to any one of claims 3 to 7, **characterized in that** a total of an amount of Cr and an amount of Mo in the softened surface layer part is 0.9 time or less of a total of an amount of Cr and an amount of Mo in the center part in the sheet thickness.

9. The high strength steel sheet according to any one of claims 3 to 8, **characterized in that** a total of an amount of Cu and an amount of Ni in the softened surface layer part is 0.9 time or less of a total of an amount of Cu and an amount of Ni in the center part in the sheet thickness.

10. The high strength steel sheet according to any one of claims 4 to 9, **characterized in that** a total of an amount of Ti and an amount of Nb in the softened surface layer part is 0.9 time or less of a total of an amount of Ti and an amount of Nb in the center part in the sheet thickness.

11. The high strength steel sheet according to any one of claims 4 to 10, **characterized in that** a total of an amount of V and an amount of W in the softened surface layer part is 0.9 time or less of a total of an amount of V and an amount of W in the center part in the sheet thickness.

12. The high strength steel sheet according to any one of claims 5 to 11, **characterized in that** an amount of B in the softened surface layer part is 0.9 time or less of an amount of B in the center part in the sheet thickness.

13. The high strength steel sheet according to any one of claims 1 to 12, **characterized in that** a surface of the softened surface layer part further contains a hot dip galvanized layer, a hot dip galvannealed layer, or an electrogalvanized layer.

14. A method of producing the high strength steel sheet according to any one of claims 1 to 13, **characterized in that** the method comprises:
superposing a softened surface layer part-use steel sheet constituting the softened surface layer part on one surface or both surfaces of a base material steel sheet constituting the center part in the sheet thickness to form a multilayer steel sheet,
heating the multilayer steel sheet to 1080°C or more and 1300°C or less and hot rolling the heated multilayer steel sheet under conditions of a finish rolling start temperature of 800°C or more and 1000°C or less,
cooling the hot rolled multilayer steel sheet to 500°C or more and 700°C or less within 2 seconds after the end of the finish rolling,
cooling the multilayer steel sheet down to a temperature of 500°C or more and 700°C or less, and then holding the multilayer steel sheet for 3 seconds or more,
pickling the multilayer steel sheet held for 3 seconds or more at a temperature of 500°C or more and 700°C or less, and then cold rolling the multilayer steel sheet by a rolling reduction of 20% or more and 70% or less, and
holding the cold rolled multilayer steel sheet at a temperature of 600°C or more and 750°C or less for 5 seconds or more, and then cooling the cold rolled multilayer steel sheet.

15. The method of producing the high strength steel sheet according to claim 14, **characterized by** coiling the multilayer steel sheet held for 3 seconds or more at a temperature of 500°C or more and 700°C or less at a coiling temperature of 600°C or less.

16. The method of producing the high strength steel sheet according to claim 15, **characterized by** holding the coiled multilayer steel sheet at a temperature of 300°C or more and 550°C or less before the cold rolling so as to temper the coiled multilayer steel sheet.
